# EUROPEAN PATENT SPECIFICATION

(11) **EP 1 131 684 B1**
(45) Date of publication and mention of the grant of the patent: **05.03.2003**
(21) Application number: 99956362.0
(22) Date of filing: 19.11.1999
(51) Int. Cl.: G05B 19/042

(54) **REDUNDANT SAFETY SWITCHING DEVICE FOR SWITCHING A LOAD**
REDUNDANTES SICHERHEITSSCHALTEINRICHTUNG ZUM SCHALTEN EINER LAST
COMMUTATEUR DE SECURITE REDONDANT PERMETTANT DE COMMUTER UNE CHARGE

(30) Priority: 19.11.1998 NL 1010601
(43) Date of publication of application: 12.09.2001
(73) Proprietor: Holec Holland N.V., 7559 SC Hengelo (NL)
(72) Inventor: LIMON, Edward, Stanley, NL-7556 JT Hengelo (NL); SCHASFOORT, Petrus, Johannes, Plechelmus, NL-7577 GE Oldenzaal (NL)
(74) Representative: Jorritsma, Ruurd
(86) International application number: NL9900714
(87) International publication number: WO00031598

(56) References cited:
- DE-A- 3 924 988

## Description

The invention relates to a safety switching device for switching a load, comprising two switches connected in series with the load and connecting the latter to an excitation source or disconnect it therefrom, and a control device, which is provided with two reciprocally decoupled control outputs for a transmission of control signals to the control inputs of the switches, in which reciprocal connection point of the switches, is connected to one of the terminals of the excitation source via a resistor which bypasses one of the switches, and in which a fault detector is connected via the resistor.

From German patent application laid open for inspection DE 3.517.030 A1 a switching device is known, comprising a series connection of two switches in the form of transistors and with a control circuit which has two equivalent, reciprocally decoupled, outputs. These two decoupled outputs are connected via resistors to the base of two transistors.

The bases of both transistors are thereby decoupled in such a way that the switching voltage reaches both bases, but, in the event of an impermissible defect, such as a bypassing of the electrodes of one transistor, the other transistor nevertheless does not become conductive. This prevents the entire switch from becoming conductive in the event of a short circuit of the electrodes of one transistor. Furthermore, the load, irrespective of a short-circuit of one of the transistors, may still be connected or disconnected and, in the absence of a switching voltage, the switch remains in the deactivated condition.

Furthermore, the German patent application DE-A-3.924.988 discloses a savety switching device comprising two field effect transistors operating as series-connected switching. These switching could connect a load to an excitation source or disconnect it therefrom. A control device is provided with two reciprocally decoupled control outputs for a transmission of control signals to the control inputs of the switches. The reciprocal connection point of the switches is connected to one of the terminals of the excitation source via a resistor which is connected in parallel to one of the switches. Via said resistor a fault detector is connected.

The object of the invention is to provide a safety switching device of the aforementioned type, the control device of the switches being fail-safe during deactivation. It must be possible to disconnect the load despite defects such as faults in the control device components. Moreover, a reactivation facility must, if possible, be provided in the event of such faults. Furthermore, in the event of a fault in the control device, the latter must be switched to a safe condition, wherein the load is disconnected. In order to achieve these objectives, it must preferably be possible to signal faults in the contro device promptly and reliably.

The aforementioned objects are achieved according to the invention in that the control device comprises a sequence device, which, on activation, first switches the first control signal to the first control output, which controls the switch not bypassed by the resistor, and, a predefined period thereafter, feeds the second control signal to the second control output.

The selected sequence of the control signals for the switches, in the event of activation when the switches are functioning correctly, produces a short pulse which corresponds to the switching time between the control signals. This pulse can then be used by an alarm circuit as the criterion for the correct functioning of the switches.

It is clear that, if the switches are not functioning correctly, no pulse of the aforementioned duration will be generated.

On disconnection of the load by the sequence device, first the second control signal and, a predefined period thereafter, the first control signal of the corresponding control outputs of the control device are preferably deactivated. In the case of this deactivation also, a corresponding pulse is then produced, provided that the switches are functioning correctly. The switches are thereby tested both on activation and deactivation.

Preferred and complete embodiments are described in the further subclaims. The invention will be explained in detail below with reference to the drawings in which:
Fig. 1 shows a circuit diagram of the safety device according to the invention;
Fig. 2 illustrates diagrams of the voltage on the reciprocal connection point of the switches shown in Figure 1 under diverse circumstances; and
Fig. 3 shows a preferred embodiment of the invention.

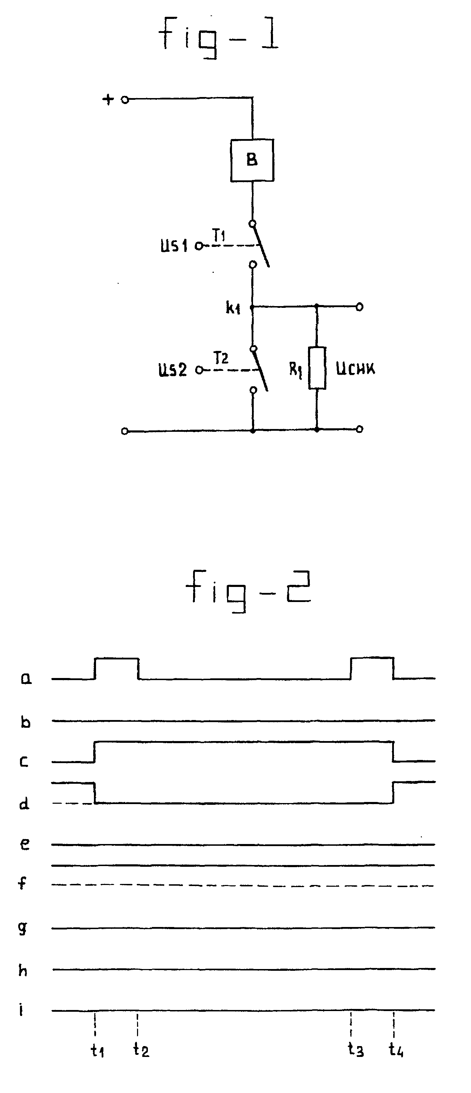

Fig. 1 shows a safety switching device comprising the series connection of switches T₁ and T₂, said switches being controlled by the control signals Uₛ₁ and Uₛ₂ respectively. The control of the switches is indicated schematically by a dotted line. The control device which generates these control signals Uₛ₁ and Uₛ₂ respectively is not shown.

The series connection of the switches T₁ and T₂ is connected in series with the load B in order to connect the latter to the excitation source U_{b} or disconnect it therefrom, under the control of the control signals Uₛ₁ and Uₛ₂.

The criterion for fault detection is derived from the reciprocal connection point k₁ of the switches T₁ and T₂. This connection point k₁ is connected via the resistor R₁ to one terminal of the excitation source, in the embodiment shown in Figure 1, to the bottom terminal of the excitation source. The switch T₂ is thus bypassed by the resistor R₁. It is clearly also possible to connect this resistor R₁ to the top terminal of the excitation source U_{b} or to the connection point between the load B and the switch T₁. However, in this option, under diverse circumstances of the safety device, voltage levels arise on the reciprocal connection point k₁ of the switches T₁ and T₂ which are the inverse of the levels which occur in the embodiment shown in Fig. 1.

It is noted that the switches T₁ and T₂ can be formed by relay contacts, transistors, field effect transistors or other controllable semiconductor switches.

This safety device may, for example, be used for the safe switching of electric motors as the load.

A voltage U_{chk}, which is fed to a fault detector, is produced over the resistor R₁.

Fig. 2 shows the voltage forms of the reciprocal connection point k₁ of the switches T₁ and T₂.

Line a shows the time diagram of the level of the connection point k₁ when the switches T₁ and T₂ are functioning correctly.

A control device not shown in Fig. 1 comprises a sequence device for feeding the control signals to the switches T₁ and T₂ in accordance with a defined sequence. Before activation, the control signal Uₛ₁ is first fed to the switch T₁, which is not bypassed by the resistor R₁. The activation of this control signal Uₛ₁ takes place at time t₁. The second control signal Uₛ₂ is then fed to the switch T₂ at time t₂. On the reciprocal connection point k₁ of the switches T₁ and T₂, a pulse then occurs, the duration of which corresponds to the time period between the feed times of the control signals Uₛ₁ and Uₛ₂. The occurrence of this pulse is an indication of the correct functioning of the switches T₁ and T₂. If the switches T₁ and T₂ are not functioning correctly, a pulse of this type with the aforementioned pulse duration will not occur. (See lines d-i in Figure 2). When the load B is disconnected, first the second control signal Uₛ₂ and, a predefined period thereafter, the first signal Uₛ₁ are deactivated by the control outputs of the control device (not shown) and are therefore not fed at these times to the switches T₁ and T₂. This particular sequence again produces a pulse with a predefined duration which corresponds to the time between the deactivation times of the control signals Uₛ₁ and Uₛ₂.

Line b in Figure 2 applies to a correctly functioning switch T₁ and a defective, short-circuited switch T₂. The level of the connection point k₁ of the switches T₁ and T₂ remains low, irrespective of whether the control signals Uₛ₁ and Uₛ₂ are or are not supplied.

When the switch T₁ is functioning correctly, even though switch T₂ is defective and remains interrupted, the voltage pattern on line c in Figure 2 occurs on activation and deactivation of the control signals Uₛ₁ and Uₛ₂.

The lines d, e and fin Figure 2 apply to a defective, short-circuited switch T₁ and respectively a correctly functioning, short-circuited and interrupted switch T₂.

The lines g, h, and i in Figure 2 apply to a defective, interrupted switch T₁ with diverse options of the switch T₂.

The voltage patterns in Figure 2 therefore show that, on activation and deactivation of the control signals Uₛ₁ and Uₛ₂, only the pulses of a predefined duration shown on line a in Figure 2 occur when the switches T₁ and T₂ are functioning correctly.

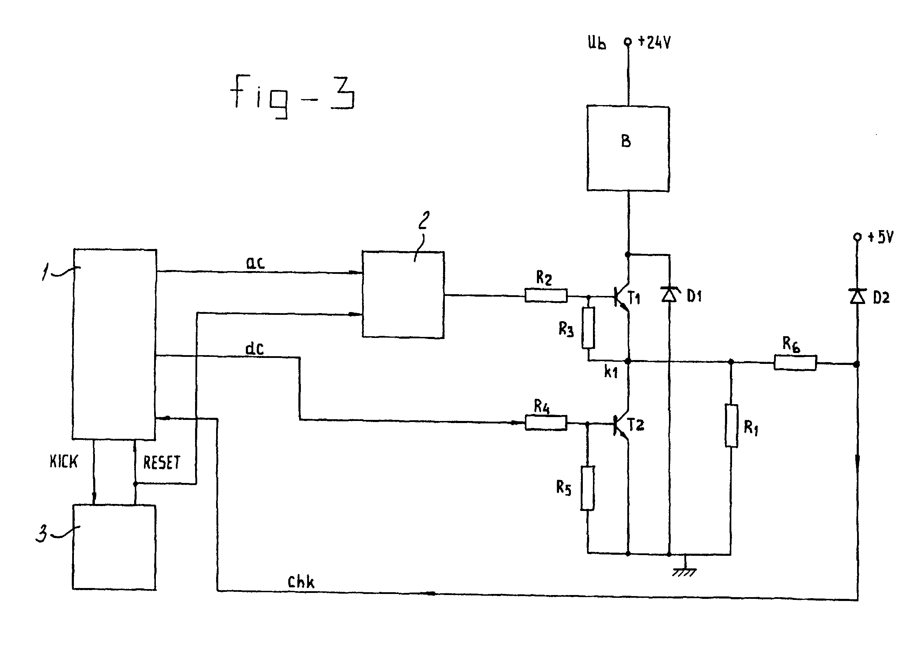

Figure 3 shows a preferred embodiment of the safety switching device according to the invention, which is suitable for switching and controlling motors of, for example, pumps in a petrochemical factory. Operational security and safety often play a crucial role here. A microprocessor or microcontroller I is used in this embodiment. This imparts the safety device with a very high degree of flexibility, although, given the increased complexity, special measures must be taken to guarantee the safety of the user.

Two types of fault are anticipated:
- semiconductor faults in the control output stages. Generally, a semiconductor will short-circuit if it becomes defective.
- a fault in the control processor. This entails a fault in the control software or a hardware fault.

The microprocessor or microcontroller 1 generates a first control signal ac in the form of a pulse train and a control signal dc with a predefined fixed level, which are used respectively to control the switches designed as transistors T₁ and T₂. The pulse train ac is fed to the control input of the retriggerable monostable multivibrator 2, the output of which is fed via the resistors R₂ and R₃ to the base emitter circuit of the transistor T₁. The second control signal dc is fed via the resistors R₄ and R₅ to the base emitter circuit of the transistor T₂.

The reciprocal connection point k₁ of the transistors T₁ and T₂ is connected via the resistor R₁ to earth. The transistors T₁ and T₂ connect and disconnect the load B. This load can be formed by a relay, possibly with upstream connection of a thermal cut-out. These options can be implemented by any normal person skilled in the art. The voltage over the connection point k₁ is fed via a voltage interface, comprising the resistor R₆ and the Zener diode D₁ and the diode D₂ to the microprocessor 1. The signal chk is an indication of the correct or incorrect functioning of the transistors T₁ and T₂. The signal chk also serves to verify whether the feed source or excitation source of the load is present.

If first the signal ac and thereafter the signal dc are activated and, on disconnection of the load B, first the signal dc and thereafter the signal ac are deactivated, depending on the correct or incorrect functioning of the transistors and associated control circuits, voltage levels occur which correspond to the voltage patterns shown in Figure 2. If the pulse train ac appears, the output of the retriggerable monostable multivibrator will go high and the transistor T₁ will be through-connected if the latter is functioning correctly. When, after a predefined period, the control signal dc is activated, the transistor T₂ is through-connected. Between the switching times of the control signals ac and dc respectively, a pulse occurs on the connection point k₁ if the transistors T₁ and T₂ are functioning correctly. After this pulse, the load B is connected to the excitation source U_{b}. The signal chk indicates the status of the connection point k₁ between the two transistors T₁ and T₂.

A fault detection function is implemented in the microprocessor 1. By means of this function, it is possible to establish whether the signal chk is a pulse of a predefined duration, so that a fault message can be transmitted to the retriggerable monostable multivibrator 2 if the signal chk is not a pulse of a predefined duration, which is an indication of a defectively operating transistor T₁ or T₂. The retriggerable monostable multivibrator 2 is then reset and, if the transistor T₁ is functioning correctly, the latter will switch to the non-conductive condition, so that the load B is disconnected, even though the transistor T₂ would form a short circuit due to a defect. The described reset circuit for the retriggerable monostable multivibrator 2 is not shown, but can be envisaged by any person skilled in the art.

The retriggerable monostable multivibrator 2 and the pulse train ac are used as an additional verification of the correct functioning of the generation of the control signal by the transistor T₁.

If the load B needs to be disconnected, first the control signal dc and only thereafter the control signal ac are deactivated. In the event of this deactivation, a pulse of a predefined duration, which corresponds to the time period between the deactivation times of the control signals ac and dc, is produced, if the transistors T₁ and T₂ are functioning correctly, on the connection point k₁ of the transistors T₁ and T₂. The signal chk indicates the status of the connection point k₁ between the two transistors T₁ and T₂ and is read in by the microprocessor. The fault detector implemented in the microprocessor tests the signal chk for the predefined duration and transmits a fault message if the defined conditions are not satisfied.

In the embodiment shown in Figure 3, the microprocessor 1 is provided with a monitoring circuit, referred to as a "watchdog" circuit 3. Provided that the microprocessor is functioning correctly, the signal kick is generated. This is a pulse train with intervals such that the watchdog circuit 3 does not respond. If the signal kick is absent, the watchdog circuit activates the reset output reset, as a result of which the retriggerable monostable multivibrator 2 is also reset. The load is therefore also disconnected herewith.

Finally, it is noted that the switching of the retriggerable monostable multivibrator with the associated pulse-shaped control signal and the reset signal can also be used if the aforementioned sequence of feeding and deactivation of the control signals is not used for the switches T₁ and T₂. In this case, the microprocessor is tested for correct functioning.

## Claims

1. Safety switching device for switching a load (B), comprising two switches (T₁, T₂) connected in series with the load (B) and connecting the latter to an excitation source (U_{b}) or disconnect it therefrom, and a control device, which is provided with two reciprocally decoupled control outputs (Uₛ₁, Uₛ₂) for the transmission of control signals to the control inputs of the switches (T₁, T₂), in which reciprocal connection point (k₁) of the switches (T₁, T₂) is connected to one of the terminals of the excitation source (U_{b}) via a resistor (R₁) which bypasses one of the switches (T₂), and in which a fault detector is connected via the resistor (R₁), **characterized in that** the control device comprises a sequence device, which, on activation, first switches the first control signal to the first control output (Uₛ₁), which controls the switch (T₁) not bypassed by the resistor (R₁), and a predefined period thereafter, feeds the second control signal to the second control output (Uₛ₂).

2. Safety switching device according to Claim 1, **characterized in that**, in the event of deactivation, the sequence device first deactivates the second control signal and, a predefined period thereafter, the first control signal of the corresponding control outputs (Uₛ₁, Uₛ₂).

3. Safety switching device according to Claim 1 or 2, **characterized in that** one of the control signals is a pulse train and the other control signal is a direct-current signal.

4. Safety switching device according to Claim 3, **characterized in that** the pulse train is fed via a retriggerable monostable multivibrator (2) to the associated control input of the switch (T₁).

5. Safety switching device according to Claim 4, **characterized in that** a fault alarm signal transmitted by the fault detector is fed as a reset signal to the monostable multivibrator.

6. Safety switching device according to one of Claims 1-5, **characterized in that** a microprocessor or microcontroller (1) is present, which performs at least one of the functions of the generation of the control signals and the fault detector and which transmits a fault alarm signal if a fault occurs in one of the two switches.

7. Safety switching device according to Claim 6, **characterized in that** a monitoring circuit (3) is provided, which is connected to an output of the microprocessor or microcontroller (1), on which a correct signal occurs if the microprocessor or microcontroller is functioning correctly, and **in that** the monitoring circuit output is connected to the reset input of the monostable multivibrator (2) in order to reset the latter if the microprocessor or microcontroller is functioning incorrectly.

8. Safety switching device according to Claim 7, **characterized in that**, if a fault occurs in one of the switches, the correct signal is not produced.

## Patentansprüche

1. Sicherheitsschalteinrichtung zum Schalten einer Last (B), umfassend
zwei Schalter (T₁, T₂), die in Serie mit der Last (B) verbunden sind und letztere mit einer Erregerquelle (U_{b}) verbinden oder von dieser trennen, und eine Steuereinrichtung, die mit zwei reziprok entkoppelten Steuerausgängen (Uₛ₁, Uₛ₂) zur Übertragung von Steuersignalen an die Steuereingänge der Schalter (T₁, T₂) ausgestattet ist, in der ein reziproker Verbindungspunkt (k₁) der Schalter (T₁, T₂) mit einem der Ausgänge der Erregerquelle (U_{b}) über einen Widerstand (R₁), der einen der Schalter (T₂) umgeht, verbunden ist und in der ein Fehlerdetektor über den Widerstand (R₁) verbunden ist, **dadurch gekennzeichnet, daß**
die Steuereinrichtung eine Sequenzeinrichtung umfaßt, die, bei Aktivierung, zuerst das erste Steuersignal auf den ersten Steuerausgang (Uₛ₁) schaltet, der den Schalter (T₁), der nicht durch den Widerstand (R₁) umgangen wird, steuert, und eine vorbestimmte Periode danach das zweite Steuersignal dem zweiten Steuerausgang (Uₛ₂) zuführt.

2. Sicherheitsschalteinrichtung nach Anspruch 1, **dadurch gekennzeichnet, daß**
die Sequenzeinrichtung, im Falle einer Deaktivierung, zuerst das zweite Steuersignal und, eine vorbestimmte Periode danach, das erste Steuersignal des entsprechenden Steuerausgangs (Uₛ₁, Uₛ₂) deaktiviert.

3. Sicherheitsschalteinrichtung nach Anspruch 1 oder 2, **dadurch gekennzeichnet, daß**
eines der Steuersignale eine Impulsfolge und das andere Steuersignal ein Gleichstromsignal ist.

4. Sicherheitsschalteinrichtung nach Anspruch 3, **dadurch gekennzeichnet, daß**
die Impulsfolge über eine nachtriggerbare, monostabile Kippschaltung (2) dem zugehörigen Steuereingang des Schalters (T₁) zugeführt wird.

5. Sicherheitsschalteinrichtung nach Anspruch 4, **dadurch gekennzeichnet, daß**
ein Fehleralarmsignal, das durch den Fehlerdetektor gesendet wird, als ein Rückstellsignal der monostabilen Kippschaltung zugeführt wird.

6. Sicherheitsschalteinrichtung nach einem der Ansprüche 1 bis 5, **dadurch gekennzeichnet, daß**
ein Mikroprozessor oder Mikrokontroller (1) vorhanden ist, der zumindest eine der Funktionen der Erzeugung der Steuersignale und des Fehlerdetektors ausführt und der ein Fehleralarmsignal sendet, wenn ein Fehler in einem der beiden Schalter auftritt.

7. Sicherheitsschalteinrichtung nach Anspruch 6, **dadurch gekennzeichnet, daß**
eine Überwachungsschaltung (3) bereitgestellt wird, die mit einem Ausgang des Mikroprozessors oder Mikrokontrollers (1) verbunden ist, an welchem ein fehlerloses Signal auftritt, wenn der Mikroprozessor oder Mikrokontroller fehlerfrei arbeitet, und in der der Überwachungsschaltungsausgang mit dem Rückstelleingang der monostabilen Kippschaltung (2) verbunden ist, um letztere zurückzustellen, wenn der Mikroprozessor oder Mikrokontroller fehlerhaft arbeitet.

8. Sicherheitsschalteinrichtung nach Anspruch 7, **dadurch gekennzeichnet, daß**
das korrekte Signal nicht erzeugt wird, wenn ein Fehler in einem der Schalter auftritt.

## Revendications

1. Interrupteur de sécurité pour changer une charge (B), composé de deux interrupteurs (T₁, T₂) connectés en série avec la charge (B) et connectant cette charge à une source d'excitation (U_{b}) ou la déconnectant de celle-ci et un dispositif de contrôle, qui est mis à disposition avec deux sorties de controle (Uₛ₁, Uₛ₂) découplées réciproquement pour la transmission des signaux de contrôle vers d'entrées de contrôle des interrupteurs (T1₁, T₂) dans
lesquels un point réciproque de connexion (k₁) des interrupteurs (T₁, T₂) est connecté à un des terminaux de la source d'excitation (U_{b}) via une résistance (R₁) qui dérive un des interrupteurs (T₂), et dans lesquels un détecteur d'anomalie est connecté via une résistance (R₁), **caractérisé en ce que** le dispositif de contrôle comprend un dispositif à séquence, qui, en activation, reporte d'abord le premier signal de contrôle sur la première sortie de contrôle (Uₛ₁), qui contrôle l'interrupteur (T₁), non dérivé par la résistance (R₁), et après une période prédéfinie, alimente le second signal de contrôle vers la seconde sortie de contrôle (Uₛ₂).

2. Interrupteur de sécurité, selon la revendication 1, **caractérisé en ce que**, dans le cas d'une désactivation, le dispositif à séquence désactive d'abord le second signal de contrôle et, après une période prédéfinie, le premier signal de contrôle de la sortie de contrôle correspondant (Uₛ₁, Uₛ₂).

3. Interrupteur de sécurité, selon la revendication 1 ou 2, **caractérisé en ce qu'**un des signaux de contrôle est une succession d'impulsions et l'autre signal de contrôle est un signal DC (courant direct).

4. Interrupteur de sécurité selon la revendication 3, **caractérisé en ce qu'**une succession d'impulsions est fournie via un multivibrateur monostable réenclenchable (2) à une entrée de contrôle associée de l'interrupteur (T₁)

5. Interrupteur de sécurité selon la revendication 4, **caractérisé en ce qu'**un signal d'alarme d'anomalie transmis par un détecteur d'anomalie est transmis au multivibrateur monostable comme signal d'annulation.

6. Interrupteur de sécurité selon une des revendications 1-5, **caractérisé en ce qu'**un microprocesseur ou microcontrôleur (1) est présent, celui-ci exécute au moins une des fonctions de génération de signaux de contrôle et le détecteur d'anomalie, celui-ci transmet une alarme d'anomalie si une anomalie apparaît dans un des deux interrupteurs.

7. Interrupteur de sécurité selon la revendication 6, **caractérisé en ce qu'**un circuit de surveillance (3) est fourni, celui-ci est connecté à une sortie du microprocesseur ou microcontrôleur (1), sur lequel un signal correct apparaît si le microprocesseur ou microcontrôleur fonctionne correctement, le circuit de surveillance étant connecté à une entrée d'annulation du multivibrateur monostable (2) de manière à annuler cette dernière si le microprocesseur ou microcontrôleur ne fonctionne pas correctement.

8. Interrupteur de sécurité selon la revendication 7, **caractérisé en ce que**, si une anomalie apparaît dans l'un des interrupteurs, le signal correct n'est pas produit.
